# EUROPÄISCHE PATENTSCHRIFT

(11) **EP 1 959 194 B1**
(45) Veröffentlichungstag und Bekanntmachung des Hinweises auf die Patenterteilung: **07.12.2016**
(21) Anmeldenummer: 08002286.6
(22) Anmeldetag: 07.02.2008
(51) Int. Cl.: F23D 14/36, F23D 14/62, F23L 15/02

(54) **Mischeinrichtung für einen Gasgebläsebrenner**
Mixing device for a gas fan burner
Dispositif de mélange pour un brûleur à gaz comprenant un ventilateur

(30) Priorität: 19.02.2007 DE 102007008460
(43) Veröffentlichungstag der Anmeldung: 20.08.2008
(73) Patentinhaber: Viessmann Werke GmbH & Co. KG, 35107 Allendorf (DE)
(72) Erfinder: Specht, Heinz-Gert, 34466 Wolfhagen (DE); Dzubiella, Manfred, Dr., 35066 Frankenberg (DE)
(74) Vertreter: Wolf, Michael

(56) Entgegenhaltungen:
- EP-A- 0 896 191
- WO-A-2006/019279
- DE-A1- 2 151 611
- DE-A1- 19 756 301
- DE-B3-102004 007 123
- US-A- 3 807 940

## Beschreibung

Die Erfindung betrifft eine Gasgebläsebrenner-Mischeinrichtung gemäß dem Oberbegriff des Patentanspruchs 1.

Eine Gasgebläsebrenner-Mischeinrichtung der eingangs genannten Art ist nach der DE 10 2004 007 123 B3 bekannt. Auch wenn dies aus den Figuren dieses Patents nicht eindeutig hervorgeht, so weiß der Fachmann, dass eine solche Vorrichtung aus einem Gehäuse besteht, in dem ein Laufrad eines Gebläses angeordnet ist und das brennerseitig eine Gas-Luft-Gemischauslassöffnung aufweist, wobei dem Laufrad eine mit genau einem Lufteinlass versehene Gas-Luft-Mischstrecke pneumatisch vorgeschaltet ist.

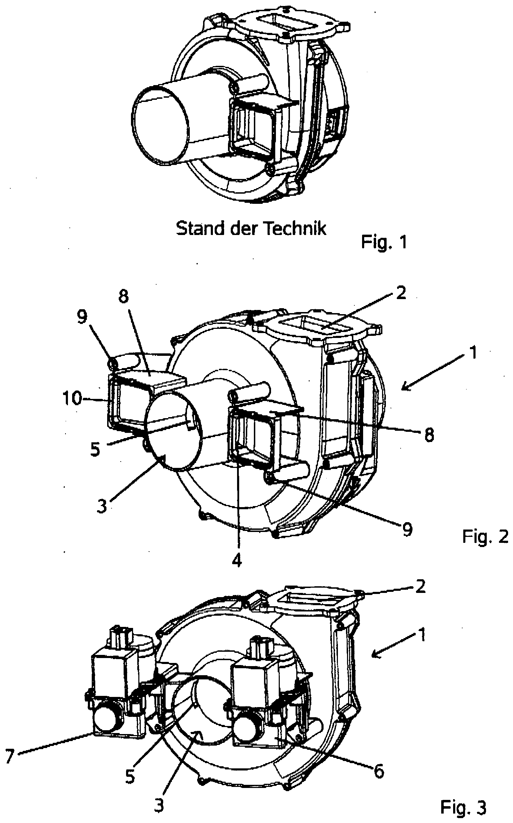

In Figur 1 ist ferner eine Mischeinrichtung der Anmelderin dargestellt. Diese ist typischerweise für einen Leistungsbereich bis zu 60 kW ausgelegt.

Der Erfindung liegt die Aufgabe zugrunde, eine Gasgebläsebrenner-Mischeinrichtung der eingangs genannten Art dahingehend weiter zu bilden, dass diese auch für Brenner mit größerer Wärmeleistung einsetzbar ist.

Diese Aufgabe ist mit einer Gasgebläsebrenner-Mischeinrichtung durch die im Kennzeichen des Patentanspruchs 1 aufgeführten Merkmale gelöst.

Nach der Erfindung ist also vorgesehen, dass die Gas-Luft-Mischstrecke mindestens zwei Gaszuführungen aufweist, wobei an jeder Gaszuführung jeweils eine Gasregelarmatur angeordnet ist.

Mit anderen Worten ausgedrückt, werden also nicht einfach, wie man dies absehbar erwarten dürfte, zur Leistungssteigerung vergrößerte Komponenten eingesetzt, die dazu in der Lage sind, einen entsprechend größeren Gas-Luft-Gemischvolumenstrom an den Brenner zu liefern. Erfindungsgemäß ist stattdessen vielmehr vorgesehen, mit den Komponenten von Heizgeräten kleinerer Leistung eine Gasgebläsebrenner-Mischeinrichtung mit höherer Leistung bereitzustellen, und zwar dadurch, dass nicht nur eine, sondern mindestens zwei oder mehr Einspeisestellen für das Brenngas an der Gas-Luft-Mischstrecke, die vorzugsweise als sogenannte Venturi-Düse ausgebildet ist, vorgesehen werden. Diese Maßgabe hat im Unterschied zu vergrößerten Komponenten den Vorteil, dass handelsübliche und damit insbesondere preiswerte Gasarmaturen verwendet werden können. Größere Gasarmaturen sind regelmäßig erheblich teurer, da sie in geringeren Stückzahlen gefertigt werden. Durch die erfindungsgemäße Lösung kann also auf technisch überraschende Weise eine Leistungssteigerung auch ohne den Einsatz entsprechend größerer Komponenten erreicht werden. Darüber hinaus verringert die Erfindung den Logistik- und Ersatzteilaufwand im Zusammenhang mit der Bereitstellung und Lagerung solcher Gasgebläsebrenner-Mischeinrichtungen.

Andere vorteilhafte Weiterbildungen ergeben sich aus den abhängigen Patentansprüchen.

Der Vollständigkeit halber wird noch auf die DE 197 56 301 A1 hingewiesen. Bei dieser Mischeinrichtung dient ein Steuerdrucksignal zur Betätigung der pneumatischen Armaturen. Darüber hinaus ist an dieser Lösung im Gegensatz zur erfindungsgemäßen Lösung nachteilig, dass zwei Gas-Luft-Mischstrecken mit entsprechend zwei Venutri-Düsen erforderlich sind.

Schließlich wird noch auf die weiter abliegenden Dokumente US 3,807,940 A, EP 0 896 191 A, WO 2006/019279 A, DE 21 51 611 A1, DE 19 55 037 U, EP 736 733 A2 hingewiesen.

Die erfindungsgemäße Gasgebläsebrenner-Mischeinrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt jeweils perspektivisch
- Figur 1: eine nach dem Stand der Technik bekannte Gasgebläsebrenner-Mischeinrichtung;
- Figur 2: die erfindungsgemäße Gasgebläsebrenner-Mischeinrichtung mit zwei Gaszuführungen, aber ohne Gasregelarmaturen; und
- Figur 3: die Gasgebläsebrenner-Mischeinrichtung gemäß Figur 2 mit zwei Gasregelarmaturen.

In Figur 1 ist, wie erwähnt, zunächst eine nach dem Stand der Technik bekannte Gasgebläsebrenner-Mischeinrichtung der Anmelderin dargestellt. Diese besteht aus einem Gehäuse 1, in dem ein Laufrad eines Gebläses (mit einer Drehachse) angeordnet ist und das brennerseitig (der Brenner ist - weil ohne weiteres vorstellbar und bekannt - nicht extra dargestellt) eine Gas-Luft-Gemischauslassöffnung 2 aufweist, wobei dem Laufrad eine mit genau einem Lufteinlass versehene Gas-Luft-Mischstrecke 3 pneumatisch vorgeschaltet ist. In ebenfalls an sich bekannter Weise ist bei der dargestellten, bevorzugten Ausführungsform vorgesehen, dass die Gas-Luft-Mischstrecke 3 aus einem etwa zylinderförmigen (kann leicht konisch zulaufend oder dergleichen ausgebildet sein), zur Achse des Laufrads zentriert an das Gehäuse 1 angeordneten Bauteil gebildet ist.

Mit Verweis auf die Figuren 2 und 3 ist für die erfindungsgemäße Gasgebläsebrenner-Mischeinrichtung nun wesentlich, dass die Gas-Luft-Mischstrecke 3 zwei (oder mehr - nicht dargestellt) Gaszuführungen 4, 5 aufweist, wobei an jeder Gaszuführung 4, 5 jeweils eine Gasregelarmatur 6, 7 angeordnet ist. Die Gesamtzahl der verwendeten Gasregelarmaturen 6, 7 definiert also den von der Mischeinrichtung zur Verfügung stellbaren Gas-Luft-Volumenstrom. Diese Maßgabe führt somit, wie eingangs erläutert, zu einer Mischeinrichtung, die bei Verwendung an sich üblicher Gasregelarmaturen für Brenner mit Wärmeleistungen bis beispielsweise 60 kW nunmehr Brenner mit deutlich höherer Wärmeleistung (vorgesehen ist zum Beispiel ein Brenner mit 105 kW) versorgen kann.

Mit Verweis auf die eingangs bereits genannte DE 10 2004 007 123 B3 ist auch bei der erfindungsgemäßen Gasgebläsebrenner-Mischeinrichtung bevorzugt vorgesehen (allerdings zur Sichtbarmachung der Gaszuführungen 4, 5 nicht dargestellt), dass die Gas-Luft-Mischstrecke 3 als Venturi-Düse ausgebildet ist. Eine solche Venturi-Düse ist bekanntlich besonders gut dazu geeignet, die einströmende Luft mit dem Brenngas zu vermischen.

Eine besonders kompakte Bauweise der erfindungsgemäßen Gasgebläsebrenner-Mischeinrichtung ergibt sich dadurch, dass an dem die Gas-Luft-Mischstrecke 3 bildenden, zylindrischen Bauteil die beiden (oder mehr) Gaszuführungen 4, 5 gehäuseseitig angeordnet sind.

Ferner ist konstruktiv bevorzugt vorgesehen, dass im Bereich jeder Gaszuführung 4, 5 ein Sockelelement 8 zur Aufnahme je einer Gasregelarmatur 6, 7 angeordnet ist. Jedes dieser Sockelelement 8 bildet eine fluiddichte Verbindung zwischen der Gaszuführung 4, 5 und der Gasregelarmatur 6, 7. Hierzu können, wie Figur 2 zeigt, am Sockelelement 8 speziell formangepaßte Dichtungselemente 10 vorgesehen sein.

Ferner ist bevorzugt vorgesehen, dass das Sockelelement 8 einstückig mit der Gas-Luft-Mischstrecke 3 verbunden ist, d. h. auf ein weiteres Dichtelement zwischen Sockelelement 8 und Gas-Luft-Mischstrecke 3 kann verzichtet werden.

Zur Befestigung der Gasarmaturen 6, 7 am Sockelelement 8 sind an diesem darüber hinaus bevorzugt in Form von Gewindebohrungen ausgebildete Befestigungsbereiche 9 vorgesehen.

Ferner ist die Gas-Luft-Mischstrecke 3 der erfindungsgemäßen Gasgebläsebrenner-Mischeinrichtung im Unterschied zur in Figur 1 dargestellten, bekannten Ausführungsform einstückig mit dem Gehäuse 1 verbunden. Besteht also das Gehäuse 1 beispielsweise aus zwei schalenförmigen Einzelbauteilen, so ist die Gas-Luft-Mischstrecke 3 an einer dieser Schalen mitangeformt.

Gemäß Figur 2 und 3 sind schließlich zwei Gaszuführungen 4, 5 bzw. zwei Gasregelarmaturen 6, 7 vorgesehen. Wie bereits erwähnt, aber nicht dargestellt, können auch mehr als jeweils zwei Komponenten vorgesehen werden. Um diese möglichst platzsparend unterzubringen, werden diese rotationssymmetrisch zur Achse des Laufrades angeordnet.

### Bezugszeichenliste

- 1: Gehäuse
- 2: Gas-Luft-Gemischauslassöffnung
- 3: Gas-Luft-Mischstrecke
- 4: Gaszuführung
- 5: Gaszuführung
- 6: Gasregelarmatur
- 7: Gasregelarmatur
- 8: Sockelelement
- 9: Befestigungsbereich
- 10: Dichtungselement

## Patentansprüche

1. Gasgebläsebrenner-Mischeinrichtung, umfassend ein Gehäuse (1), in dem ein Laufrad eines Gebläses angeordnet ist und das brennerseitig eine Gas-Luft-Gemischauslassöffnung (2) aufweist, wobei dem Laufrad eine mit genau einem Lufteinlass versehene Gas-Luft-Mischstrecke (3) pneumatisch vorgeschaltet ist,
**dadurch gekennzeichnet,**
**dass** die Gas-Luft-Mischstrecke (3) mindestens zwei Gaszuführungen (4, 5) aufweist, wobei an jeder Gaszuführung (4, 5) jeweils eine Gasregelarmatur (6, 7) angeordnet ist.

2. Gasgebläsebrenner-Mischeinrichtung nach Anspruch 1,
**dadurch gekennzeichnet,**
**dass** die Gas-Luft-Mischstrecke (3) als Venturi-Düse ausgebildet ist.

3. Gasgebläsebrenner-Mischeinrichtung nach Anspruch 1 oder 2, wobei die Gas-Luft-Mischstrecke (3) aus einem etwa zylinderförmigen, zur Achse des Laufrads zentriert an das Gehäuse (1) angeordneten Bauteil gebildet ist,
**dadurch gekennzeichnet,**
**dass** an dem Bauteil die mindestens zwei Gaszuführungen (4, 5) gehäuseseitig angeordnet sind.

4. Gasgebläsebrenner-Mischeinrichtung nach einem der Ansprüche 1 bis 3,
**dadurch gekennzeichnet,**
**dass** im Bereich jeder Gaszuführung (4, 5) ein Sockelelement (8) zur Aufnahme je einer Gasregelarmatur (6, 7) vorgesehen ist.

5. Gasgebläsebrenner-Mischeinrichtung nach Anspruch 4,
**dadurch gekennzeichnet,**
**dass** jedes Sockelelement (8) eine fluiddichte Verbindung zwischen der Gaszuführung (4, 5) und der Gasregelarmatur (6, 7) bildet.

6. Gasgebläsebrenner-Mischeinrichtung nach Anspruch 4 oder 5,
**dadurch gekennzeichnet,**
**dass** das Sockelelement (8) einstückig mit der Gas-Luft-Mischstrecke (3) verbunden ist.

7. Gasgebläsebrenner-Mischeinrichtung nach einem der Ansprüche 4 bis 6,
**dadurch gekennzeichnet,**
**dass** am Sockelelement (8) Befestigungsbereiche (9), vorzugsweise Gewindebohrungen, für die Gasarmatur (6, 7) vorgesehen sind.

8. Gasgebläsebrenner-Mischeinrichtung nach einem der Ansprüche 1 bis 7,
**dadurch gekennzeichnet,**
**dass** die Gas-Luft-Mischstrecke (3) einstückig mit dem Gehäuse (1) verbunden ist.

9. Gasgebläsebrenner-Mischeinrichtung nach einem der Ansprüche 1 bis 8,
**dadurch gekennzeichnet,**
**dass die** Gaszuführungen (4, 5) und die Gasregelarmaturen (6, 7) rotationssymmetrisch zur Achse des Laufrades angeordnet sind.

10. Gasgebläsebrenner-Mischeinrichtung nach einem der Ansprüche 1 bis 9,
**dadurch gekennzeichnet,**
**dass** die Gesamtzahl der verwendeten Gasregelarmaturen (6, 7) einen von der Mischeinrichtung zur Verfügung stellbaren Gas-Luft-Volumenstrom definiert.

## Claims

1. Gas fan burner mixing device, comprising a housing (1) in which an impeller of a fan is located and which has a gas-air mixing outlet opening (2) on the burner side, wherein a gas-air mixing section (3) provided with precisely one air inlet is located pneumatically upstream of the impeller,
**characterized in**
**that** the gas-air mixing section (3) has at least two gas supplies (4, 5), wherein a gas flow regulator fitting (6, 7) is located at each gas supply (4, 5).

2. The gas fan burner mixing device according to claim 1,
**characterized in**
**that** the gas-air mixing section (3) is configured as a Venturi nozzle.

3. The gas fan burner mixing device according to claim 1 or 2, wherein the gas-air mixing section (3) is formed from an approximately cylindrical component disposed on the housing (1) centered with respect to the axis of the impeller,
**characterized in**
**that** at least two gas supplies (4, 5) are disposed on the component on the housing side.

4. The gas fan burner mixing device according to any one of claims 1 to 3,
**characterized in**
**that** a base element (8) for receiving respectively one gas flow regulator fitting (6, 7) is provided in the region of each gas supply (4, 5).

5. The gas fan burner mixing device according to claim 4,
**characterized in**
**that** each base element (8) forms a fluid-tight connection between the gas supply (4, 5) and the gas flow regulator fitting (6, 7).

6. The gas fan burner mixing device according to claims 4 or 5,
**characterized in**
**that** the base element (8) is connected in one piece to the gas-air mixing section (3).

7. The gas fan burner mixing device according to any one of claims 4 to 6,
**characterized in**
**that** fastening regions (9), preferably threaded bores, for the gas fittings (6, 7) are provided on the base element (8).

8. The gas fan burner mixing device according to any one of claims 1 to 7,
**characterized in**
**that** the gas-air mixing section (3) is connected in one piece to the housing (1).

9. The gas fan burner mixing device according to any one of claims 1 to 8,
**characterized in**
**that** the gas supplies (4, 5) and the gas flow regulator fittings (6, 7) are disposed rotationally symmetrically to the axis of the impeller.

10. The gas fan burner mixing device according to any one of claims 1 to 9,
**characterized in**
**that** the total number of gas flow- regulator fittings (6, 7) used defines a gas-air volume flow which can be provided by the mixing device.

## Revendications

1. Dispositif de mélange - brûleur à soufflante de gaz, comprenant un logement (1), dans lequel un volant d'un ventilateur est disposé et qui présente du côté du brûleur une ouverture d'évacuation de mélange gaz-air (2), dans lequel en amont du volant est montée pneumatiquement une voie de mélange gaz-air (3) pourvue d'exactement une admission d'air,
**caractérisé en ce que**
la voie de mélange gaz-air (3) présente au moins deux conduites de gaz (4, 5), dans lequel sur chaque conduite de gaz (4, 5) respectivement une robinetterie de réglage de gaz (6, 7) est disposée.

2. Dispositif de mélange - brûleur à soufflante de gaz selon la revendication 1,
**caractérisé en ce que**
la voie de mélange gaz-air (3) est conçue comme une buse Venturi.

3. Dispositif de mélange - brûleur à soufflante de gaz selon la revendication 1 ou 2, dans lequel la voie de mélange gaz-air (3) est formée par un composant approximativement cylindrique, disposé de manière centrée sur le logement (1) par rapport à l'axe du volant,
**caractérisé en ce que**
sur le composant au moins deux conduites de gaz (4, 5) sont disposées du côté du logement.

4. Dispositif de mélange - brûleur à soufflante de gaz selon une des revendications 1 à 3,
**caractérisé en ce que**
au niveau de chaque conduite de gaz (4, 5) un élément de socle (8) pour recevoir respectivement une robinetterie de régulation de gaz (6, 7) est prévue.

5. Dispositif de mélange - brûleur à soufflante de gaz selon la revendication 4,
**caractérisé en ce que**
chaque élément de socle (8) forme une liaison étanche au fluide entre la conduite de gaz (4, 5) et la robinetterie de régulation de gaz (6, 7).

6. Dispositif de mélange - brûleur à soufflante de gaz selon la revendication 4 ou 5,
**caractérisé en ce que**
l'élément de socle (8) est relié en un seul tenant avec la voie de mélange gaz-air (3).

7. Dispositif de mélange - brûleur à soufflante de gaz selon une des revendications 4 à 6,
**caractérisé en ce que**
sur l'élément de socle (8) des zones de fixation (9), de préférence des alésages filetés, pour la robinetterie de gaz (6, 7) sont prévues.

8. Dispositif de mélange - brûleur à soufflante de gaz selon une des revendications 1 à 7,
**caractérisé en ce que**
la voie de mélange gaz-air (3) est reliée en un seul tenant avec le logement (1).

9. Dispositif de mélange - brûleur à soufflante de gaz selon une des revendications 1 à 8,
**caractérisé en ce que**
les conduites de gaz (4, 5) et les robinetteries de régulation de gaz (6, 7) sont disposées symétriquement en rotation par rapport à l'axe du volant.

10. Dispositif de mélange - brûleur à soufflante de gaz selon une des revendications 1 à 9,
**caractérisé en ce que**
le nombre total des robinetteries de régulation de gaz (6, 7) utilisées définit un courant volumique gaz-air pouvant être fourni par le dispositif de mélange.
